(19) Europäisches Patentamt
European Patent Office
Office européen des brevets

(11) **EP 3 701 231 B1**

(12) **EUROPÄISCHE PATENTSCHRIFT**

(45) Veröffentlichungstag und Bekanntmachung des Hinweises auf die Patenterteilung:
**08.03.2023   Patentblatt 2023/10**

(21) Anmeldenummer: **18782403.2**

(22) Anmeldetag: **02.10.2018**

(51) Internationale Patentklassifikation (IPC):
**G01F 1/84** *(2006.01)*      **G01F 25/10** *(2022.01)*

(52) Gemeinsame Patentklassifikation (CPC):
**G01F 1/8431; G01F 1/8436; G01F 1/8477; G01F 25/10;** G01F 1/8427

(86) Internationale Anmeldenummer:
**PCT/EP2018/076797**

(87) Internationale Veröffentlichungsnummer:
**WO 2019/081169 (02.05.2019 Gazette 2019/18)**

(54) **CORIOLIS-MASSEDURCHFLUSSMESSGERÄT MIT ZWEI MESSROHRPAAREN, UND VERFAHREN ZUM NULLPUNKTABGLEICH EINES SOLCHEN MASSEDURCHFLUSSMESSGERÄTES**

CORIOLIS MASS FLOW METER WITH TWO PAIRS OF MEASURING TUBES, AND METHOD FOR ZERO POINT CALIBRATING SUCH A MASS FLOW METER

DÉBITMÈTRE MASSIQUE DU TYPE CORIOLIS AVEC DEUX PAIRES DE TUBES DE MESURE, ET PROCÉDÉ DE CALIBRATION DE POINT ZÉRO D'UN TEL DÉBITMÈTRE MASSIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2017   DE 102017125271**

(43) Veröffentlichungstag der Anmeldung:
**02.09.2020   Patentblatt 2020/36**

(73) Patentinhaber: **Endress+Hauser Flowtec AG
4153 Reinach (CH)**

(72) Erfinder: **ZHU, Hao
85354 Freising (DE)**

(74) Vertreter: **Hahn, Christian et al
Endress+Hauser Group Services
(Deutschland)AG +Co. KG
Colmarer Straße 6
79576 Weil am Rhein (DE)**

(56) Entgegenhaltungen:
**DE-A1-102004 035 971      US-A1- 2009 272 173**

## Beschreibung

Die vorliegende Erfindung betrifft ein Massedurchflussmessgerät nach dem Coriolis-Prinzip mit mindestens zwei Messrohrpaaren, wobei die beiden Messrohrpaare voneinander abweichende Nutzmodeeigenfrequenzen für einen jeweiligen Biegeschwingungsnutzmode aufweisen. Ein gattungsgemäßes Massedurchflussmessgerät ist beschrieben in DE 10 2015 104 931 A1. Die abweichenden Nutzmodeeigenfrequenzen sind vorteilhaft um ein Übersprechen zwischen den Schwingungen der Messrohrpaare zu minimieren. Ein Massedurchflussmessgerät, bei dem zwei Messrohrpaare, zum Beispiel aufgrund von Schwankungen des Massendurchflusses, der Dichte, der Viskosität und/oder der Temperatur, momentan voneinander abweichende Nutzmodeeigenfrequenzen für einen jeweiligen Schwingungsnutzmode aufweisen können, ist aus DE 10 2004 035971 A1 bekannt.

Die Messrohrpaare weisen jeweils einen elektrodynamischen Erreger zum Anregen von Biegeschwingungen und jeweils zwei Schwingungssensoren zum Erfassen der Biegeschwingungen auf, wobei die Schwingungssensoren eines Messrohrpaares jeweils einlaufseitig und auslaufseitig angeordnet sind. Grundsätzlich kann jedes Messrohrpaar für sich mit einer unabhängigen Betriebs- und Auswertungsschaltung zum Treiben des Erregers und zum Erfassen von Sensorsignalen ausgerüstet sein, was jedoch den Schaltungsaufwand gegenüber einem herkömmlichen Massedurchflussmessgerät mit nur einem Messrohrpaar erheblich vergrößert. Es ist daher anzustreben nur eine Betriebs- und Auswerteschaltung vorzusehen, welche die Erreger beider Messrohrpaare über eine gemeinsame Erregerschleife treibt und die Signale der einlaufseitigen Schwingungssensoren beider Messrohrpaare sowie die die Signale der auslaufseitigen Schwingungssensoren beider Messrohrpaare jeweils über eine einlaufseitige bzw. auslaufseitige Sensorschleife erfasst.

Hierbei kann es aufgrund der unterschiedlichen Eigenfrequenzen in Kombination mit Fertigungstoleranzen zu einem Nullpunktfehler kommen, wie im Folgenden erläutert wird.

Bei Massedurchflussmessgeräten nach dem Coriolis-Prinzip wird eine durchflussproportionale Phasenverschiebung zwischen den Signalen eines einlaufseitigen Schwingungssensors und eines auslaufseitigen Schwingungssensors erfasst. Hierzu wird insbesondere die Phasendifferenz der jeweiligen Maxima der Signale beim Durchlaufen der Ruhelage erfasst.

Fertigungstoleranzen können dazu führen, dass die einlaufseitigen und auslaufseitigen Schwingungssensoren unterschiedlich empfindlich sind und damit bei gleichem Schwingungsverhalten unterschiedliche Signalamplituden aufweisen. Bei einem Massedurchflussmessgerät mit nur einem Messrohrpaar ist das insoweit unschädlich als die Signale durch Amplitudenvariationen keine Phasenveränderung erfahren. Dies ändert sich bei der Überlagerung der Sensorsignale zweier Messrohrpaare mit unterschiedlicher Eigenfrequenzen. Die Biegeschwingungsnutzmode eines Messrohrpaares wird mit deren Nutzmodeeigenfrequenz angeregt. Dies führt zu einer maximalen Amplitude und zu einem Phasenwinkel von π/2 zwischen dem Erregersignal und der Auslenkung. Da beim oben beschriebenen Aufbau die Erreger beider Messrohrpaare über eine gemeinsame Erregerschleife getrieben werden, wird jedes Messrohrpaar auch mit der Eigenfrequenz der Biegeschwingungsnutzmode des jeweils anderen Messrohrpaares mit dessen abweichender Nutzmodeeigenfrequenz angeregt. Das führt zu einer überlagerten Schwingung außer Resonanz mit einer erheblich geringeren Amplitude und einem Phasenwinkel von 0 bzw. π zwischen dem Erregersignal und der Auslenkung. Die überlagerte Schwingung eines Messrohrpaares bei der Nutzmodeeigenfrequenz des anderen Messrohrpaares weist also gegenüber dessen Schwingung in Resonanz eine Phasenverschiebug um ± π/2 auf. Da die Signale Schwingungssensoren beider Messrohrpaare über gemeinsame Sensorschleifen erfasst werden, sind bei der Nutzmodeeigenfrequenz eines Messrohrpaares die Signale der Schwingungssensoren dieses in Resonanz schwingenden Messrohrpaares sowie die Signale der Schwingungssensoren der erzwungenen Schwingungen des anderen Messrohrpaares überlagert, wobei letztere um ± π/2 gegenüber ersteren verschoben sind.

Die Überlagerung von Sensorsignalen zweier Messrohrpaare mit unterschiedlichen Amplitudenverhältnissen, zwischen einlaufseitigen und auslaufseitigen Sensoren, kann daher zu einer Phasendifferenz zwischen den Signalen bewirken, die einen Nullpunktfehler des Massedurchflussmessgerätes bewirken.

Es ist daher die Aufgabe der vorliegenden Erfindung, hier Abhilfe zu schaffen.

Die Aufgabe wird erfindungsgemäß gelöst durch das Massedurchflussmessgerät gemäß dem unabhängigen Patentanspruch 1 und das Verfahren zum Nullpunktabgleich eines Massedurchflussmessgerätes gemäß dem unabhängigen Patentanspruch 5.

Das erfindungsgemäße Massedurchflussmessgerät nach dem Coriolis-Prinzip, zum Bestimmen eines Massedurchflussmesswerts eines das Massedurchflussmessgerät durchströmenden Mediums umfasst:

ein erstes Messrohrpaar mit zwei gegeneinander schwingfähig gelagerten Messrohren mit einer Biegeschwingungsnutzmode, die eine erste medienabhängige Nutzmodeeigenfrequenz f1 aufweist;

einen ersten elektrodynamischen Erreger zum Anregen von Biegeschwingungen zwischen den Messrohren des ersten Messrohrpaares,

ein erstes Schwingungssensorpaar mit einem ersten einlaufseitigen Schwingungssensor und einem ersten auslaufseitigen Schwingungssensor zum Erfassen von Biegeschwingungen an zwei Positionen des ersten Messrohrpaares;

ein zweites Messrohrpaar mit zwei gegeneinander schwingfähig gelagerten Messrohren mit einer Biegeschwingungsnutzmode, die eine zweite medienabhängige Nutzmodeeigenfrequenz f2 aufweist,

einen zweiten elektrodynamischen Erreger zum Anregen von Biegeschwingungen zwischen den Messrohren des zweiten Messrohrpaares;

ein zweites Schwingungssensorpaar mit einem zweiten einlaufseitigen Schwingungssensor und einem zweiten auslaufseitigen Schwingungssensor zum Erfassen von Biegeschwingungen an zwei Positionen des zweiten Messrohrpaares;

eine Betriebs- und Auswerteschaltung; zum Treiben des ersten und zweiten elektrodynamischen Erregers mit einem gemeinsamen Erregersignal und zum Erfassen von Signalen der Schwingungssensoren, zum Ermitteln von durchflussabhängigen Phasendifferenzen zwischen den Signalen der einlaufseitigen und auslaufseitigen Schwingungssensoren eines der Schwingungssensorpaare und zum Ermitteln von Massedurchflussmesswerten auf Basis dieser durchflussabhängigen Phasendifferenzen;

wobei das Erregersignal, welches ein überlagertes Signal der Nutzmodeeigenfrequenzen beider Messrohrpaare umfasst, zum Anregen der Biegeschwingungsnutzmoden beider Messrohrpaare dient;

wobei Resonanzschwingungen bei der jeweiligen Nutzmodeeigenfrequenz eines Messrohrpaares eine um ein Vielfaches größere Amplitude aufweisen als die erzwungenen Schwingungen außer Resonanz bei der Nutzmodeeigenfrequenz des jeweils anderen Messrohrpaares;

wobei ein Erregersignalpfad dazu eingerichtet ist, das Erregersignal zum ersten und zweiten elektrodynamischen Erreger zu übertragen;

wobei ein einlaufseitiger Sensorsignalpfad dazu eingerichtet ist, Signale des ersten und des zweiten einlaufseitigen Schwingungssensors überlagert zu übertragen;

wobei ein auslaufseitiger Sensorsignalpfad dazu eingerichtet ist, Signale des ersten und des zweiten auslaufseitigen Schwingungssensors überlagert zu übertragen;

wobei die Sensorsignale bei Schwingungen mit der der ersten Nutzmodeeigenfrequenz f1 eine erste relative Signalamplitudendifferenz $delta_1$ zwischen den Signalen der einlaufseitigen Sensoren und den Signalen der auslaufseitigen Sensoren aufweisen,

wobei die Sensorsignale bei Schwingungen mit der der zweiten Nutzmodeeigenfrequenz f2 eine zweite relative Signalalmplitudendifferenz $delta_2$ zwischen den Signalen der einlaufseitigen Sensoren und den Signalen der auslaufseitigen Sensoren aufweisen,

wobei der Betrag der Differenzabweichung D = $|delta_1 - delta_2|$ der zweiten relativen Signalamplitudendifferenz von der ersten relativen Signalamplitudendifferenz $delta_1$ nicht mehr als einen Toleranzwert Dr beträgt, also $D \le D_T$, wobei gilt $D_T < 2\%$, insbesondere $D_T < 1\%$.

In einer Weiterbildung der Erfindung ist die relative Signalamplitudendifferenz $delta_i$ zwischen den Signalamplituden der Schwingungssensoren des i-ten Messrohrpaares bei Schwingungen mit dessen Nutzmodeeigenfrequenz fi definiert als:

$$delta_i = \frac{2 \cdot (A_{in,i} - A_{out,i})}{A_{in,i} + A_{out,i}}.$$

Hierbei sind $A_{in,i}$ und $A_{out,i}$ die einlaufseitigen und auslaufseitigen Signalamplituden bei der Nutzmodeeigenfrequenz fi.

In einer Weiterbildung der Erfindung beträgt der Toleranzwert der Differenzabweichung $D_T$ nicht mehr als 0,5%, beispielsweise nicht mehr als 0,2%, insbesondere nicht mehr als 0,1 %.

In einer Weiterbildung der Erfindung beträgt der absolute Betrag der Differenzabweichung geteilt durch die Summe der absoluten Beträge der relativen Signalamplitudendifferenz nicht mehr als 0,5, beispielsweise nicht mehr als 0,3 insbesondere nicht mehr als 0,2.

Das erfindungsgemäße Verfahren dient zum Nullpunktabgleich eines Massedurchflussmessgeräts nach dem Coriolis-Prinzip, zum Bestimmen eines Massedurchflussmesswerts eines das Massedurchflussmessgerät durchströmenden Mediums, welches Durchflussmessgerät umfasst:

ein erstes Messrohrpaar mit zwei gegeneinander schwingfähig gelagerten Messrohren mit einer Biegeschwingungsnutzmode, die eine erste medienabhängige Nutzmodeeigenfrequenz f1 aufweist;

einen ersten elektrodynamischen Erreger zum Anregen von Biegeschwingungen zwischen den Messrohren des ersten Messrohrpaares,

ein erstes Schwingungssensorpaar mit einem ersten einlaufseitigen Schwingungssensor und einem ersten auslaufseitigen Schwingungssensor zum Erfassen von Biegeschwingungen an zwei Positionen des ersten Messrohrpaares;

ein zweites Messrohrpaar mit zwei gegeneinander schwingfähig gelagerten Messrohren mit einer Biegeschwingungsnutzmode, die eine zweite medienabhängige Nutzmodeeigenfrequenz f2 aufweist,

einen zweiten elektrodynamischen Erreger zum Anregen von Biegeschwingungen zwischen den Messrohren des zweiten Messrohrpaares;

ein zweites Schwingungssensorpaar mit einem zweiten einlaufseitigen Schwingungssensor und einem zweiten auslaufseitigen Schwingungssensor zum Erfassen von Biegeschwingungen an zwei Positionen des zweiten Messrohrpaares;

eine Betriebs- und Auswerteschaltung; zum Treiben des ersten und zweiten elektrodynamischen Erregers mit einem gemeinsamen Erregersignal und zum Erfassen von Signalen der Schwingungssensoren; zum Ermitteln von durchflussabhängigen Phasendifferenzen zwischen den Signalen der einlaufseitigen und auslaufseitigen Schwingungssensoren eines der Schwingungssensorpaare und zum Ermitteln von Massedurchflussmesswerten auf Basis dieser durchflussabhängigen Phasendifferenzen;

wobei das Erregersignal zum Anregen der Biegeschwingungsnutzmoden beider Messrohrpaare dient;

wobei ein Erregersignalpfad dazu eingerichtet ist, das Erregersignal zum ersten und zweiten elektrodynamischen Erreger zu übertragen;

wobei ein einlaufseitiger Sensorsignalpfad dazu eingerichtet ist, Signale des ersten und des zweiten einlaufseitigen Schwingungssensors überlagert zu übertragen;

wobei ein auslaufseitiger Sensorsignalpfad dazu eingerichtet ist, Signale des ersten und des zweiten auslaufseitigen Schwingungssensors überlagert zu übertragen;

wobei das Verfahren die folgenden Schritte umfasst:

Ermitteln von Sensorsignalamplituden der einlaufseitigen Schwingungssensoren bei Schwingungen der Messrohre mit der der ersten Nutzmodeeigenfrequenz f1;

Ermitteln von Sensorsignalamplituden der auslaufseitigen Schwingungssensoren bei Schwingungen der Messrohre mit der der ersten Nutzmodeeigenfrequenz f1;

Ermitteln von Sensorsignalamplituden der einlaufseitigen Schwingungssensoren bei Schwingungen der Messrohre mit der der zweiten Nutzmodeeigenfrequenz f2;

Ermitteln von Sensorsignalamplituden der auslaufseitigen Schwingungssensoren bei Schwingungen der Messrohre mit der der zweiten Nutzmodeeigenfrequenz f2;

Ermitteln einer ersten Signalamplitudendifferenz delta, zwischen den Signalen der einlaufseitigen Schwingungssensoren und den Signalen der auslaufseitigen Schwingungssensoren bei Schwingungen der Messrohre mit der der ersten Nutzmodeeigenfrequenz,

Ermitteln einer zweiten Signalamplitudendifferenz $delta_2$ zwischen den Signalen der einlaufseitigen Schwingungssensoren und den Signalen der auslaufseitigen Schwingungssensoren bei Schwingungen der Messrohre mit der der zweiten Nutzmodeeigenfrequenz,

Vergleichen der ersten Signalamplitudendifferenz mit der zweiten Signalamplitudendifferenz; und

Angleichen der Signalamplitudendifferenzen durch Trimmen der Empfindlichkeit mindestens eines Schwingungssensors, so dass der Betrag einer Differenzabweichung zwischen der ersten Signalamplitudendifferenz und der zweiten Signalamplitudendifferenz nicht mehr als einen Toleranzwert $D_T = 1\%$ beträgt, wobei gilt $D_T < 1\%$.

In einer Weiterbildung der Erfindung beträgt der Toleranzwert der Differenzabweichung $D_T$ nicht mehr als 0,5%, beispielsweise nicht mehr als 0,2%, insbesondere nicht mehr als 0,1%.

In einer Weiterbildung der Erfindung beträgt der Betrag der Differenzabweichung geteilt durch die Summe der Beträge der Signalamplitudendifferenz nicht mehr als 0,5, beispielsweise nicht mehr als 0,3 insbesondere nicht mehr als 0,2.

In einer Weiterbildung der Erfindung erfolgt das Trimmen der Empfindlichkeit des mindestens einen Schwingungssensors durch Variieren einer relativen Position zwischen einem Magneten und einer Spule des Schwingungssensors.

In einer Weiterbildung der Erfindung erfolgt das Trimmen der Empfindlichkeit des einen Schwingungssensors durch Variieren eines Ruhelagenabstands zwischen einem Magneten und einer Spule des mindestens einen Schwingungssensors.

In einer Weiterbildung der Erfindung erfolgt das Trimmen der Empfindlichkeit des mindestens einen Schwingungssensors durch Variieren eines Grades koaxialer Ausrichtung zwischen einem Magneten und einer Spule des mindestens einen Schwingungssensors.

In einer Weiterbildung der Erfindung erfolgt das Trimmen der Empfindlichkeit des mindestens einen Schwingungssensors durch Variieren der Position des Schwingungssensors in Richtung der Längsachse des Messrohrs.

in einer Weiterbildung der Erfindung erfolgt das Trimmen der Empfindlichkeit des mindestens einen Schwingungssensors durch Variieren der Position des Schwingungssensors senkrecht zur Richtung der Längsachse des Messrohrs.

In einer Weiterbildung der Erfindung erfolgt das Trimmen der Empfindlichkeit des mindestens einen Schwingungssensors durch Variieren der wirksamen Windungszahl der Spule des Schwingungssensors.

In einer Weiterbildung der Erfindung erfolgt das Angleichen der Signalamplitudendifferenzen durch Trimmen der Empfindlichkeit genau eines Schwingungssensors.

Die Erfindung wird nun anhand eines in den Zeichnungen dargestellten Ausführungsbeispiels näher erläutert. Es zeigt:

Fig. 1a: eine schematische Frontansicht eines ersten Ausführungsbeispiels eines erfindungsgemäßen Massedurchflussmessgerätes;

Fig. 1b: eine schematische Seitenansicht des ersten Ausführungsbeispiels eines erfindungsgemäßen Massedurchflussmessgerätes ohne Trägerrohr;

Fig. 1c: eine räumliche Darstellung des ersten Ausführungsbeispiels eines erfindungsgemäßen Massedurchflussmessgerätes ohne Trägerrohr;

Fig. 1d: eine räumliche Darstellung des ersten Ausführungsbeispiels eines erfindungsgemäßen Massedurchflussmessgerätes mit montiertem Trägerrohr,

Fig. 2a: einen Signalverlauf von Schwingungssensorsignalen bei gleichen Amplitudenverhältnissen für beide Messrohrpaare;

Fig. 2b: einen Signalverlauf von Schwingungssensorsignalen bei verschiedenen Amplitudenverhältnissen für die beiden Messrohrpaare;

Fig. 3a: eine räumliche Darstellung von separierten Komponenten eines Schwingungssensors eines Ausführungsbeispiels eines erfindungsgemäßen Massedurchflussmessgerätes;

Fig. 3b: eine räumliche Darstellung der Komponenten eines Schwingungssensors aus Fig. 3a in einer betriebsbereiten Position zueinander;

Fig. 3c: eine schematische räumliche Darstellung zur Anordnung von Komponenten eines Schwingungssensors an einem Messrohrpaar eines Ausführungsbeispiels eines erfindungsgemäßen Massedurchflussmessgerätes;

Fig. 3d: eine schematische Darstellung eines Spulenhalters des Schwingungssensors aus Fign. 3a und 3b;

Fig. 3e: eine schematische eines modifizierten Magnethalters des Schwingungssensors aus Fign. 3a und 3b;

Fig. 4: ein Flussdiagramm eines Ausführungsbeispiels des erfinderischen Verfahrens;

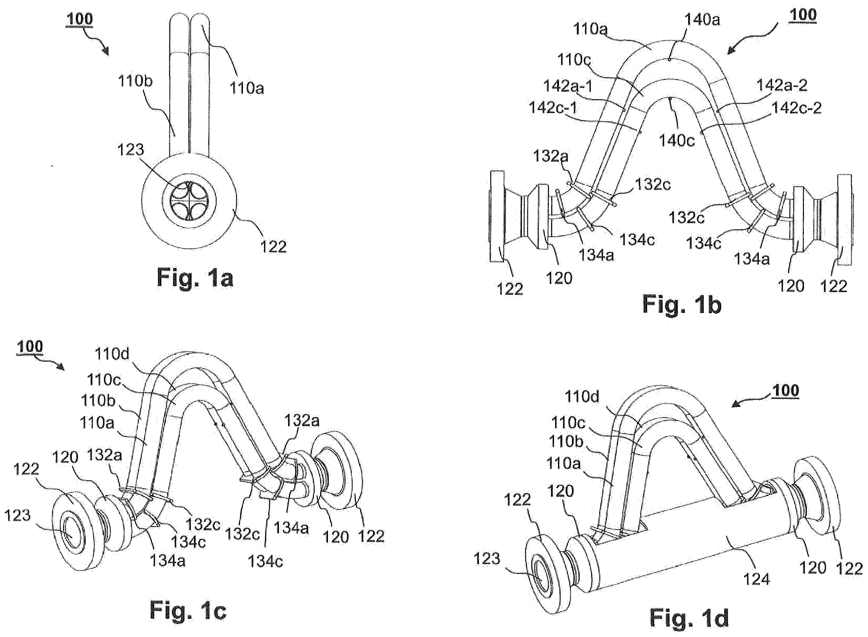

Das in Fign. 1a bis 1d dargestellte Ausführungsbeispiel eines erfindungsgemäßen Massedurchflussmessgerätes 100 umfasst vier gebogene Messrohre 110a, 11 0b, 110c, 110d. Die Messrohre 110a, 110b, 110c, 110d erstrecken sich zwischen einem einlaufseitigen Sammler 120 und einem auslaufseitigen Sammler 120, und sind mit diesen fest verbunden, beispielsweise durch Einwalzen, Hartlöten oder Schweißen. Zwischen den Sammlern 120 erstreckt sich ein massives Trägerrohr 124, das mit beiden Sammlern fest verbunden ist, wodurch die Sammler 120 starr miteinander gekoppelt sind. Das Trägerrohr 124 weist an seiner Oberseite Öffnungen auf, durch welche die Messrohre 110a, 110b, 110c, 110d von den Sammlern 120 aus dem Trägerrohr 124 heraus- und zurückgeführt sind.

Die Sammler 120 weisen endständig jeweils einen Flansch 122 auf, mittels dessen das Massedurchflussmessgerätes in einer Rohrleitung zu installieren ist. Durch zentrale Öffnungen 123 in den Flanschen 122 ist ein Massestrom durch das Massedurchflussmessgerät 100, insbesondere dessen Messrohre 110a, 110b, 110c, 110d zu führen, um den Massestrom zu messen.

Ein erstes Messrohr 110a und ein zweites Messrohr 110b sind einlaufseitig und auslaufseitig jeweils mit zwei Knotenplatten 132a, 134a verbunden, wobei durch die Position der beiden inneren der Knotenplatten 132a, also durch jene, welche einlaufseitig bzw. auslaufseitig jeweils am weitesten vom entsprechenden Sammler 120 entfernt sind, eine freie Schwingungslänge eines durch das erste Messrohr 110a, und das zweite Messrohr 110b gebildeten ersten Messrohrpaars festgelegt ist. Diese freie Schwingungslänge hat großen Einfluss auf eine Biegeschwingungsnutzmode des ersten Messrohrpaars, insbesondere auf deren Nutzmodeigenfrequenz, mit welcher das erste Messrohrpaar anzuregen ist. Entsprechend sind ein drittes Messrohr 110c und ein viertes Messrohr 110d einlaufseitig und auslaufseitig jeweils mit zwei Knotenplatten 132c, 134c verbunden, wobei durch die Position der beiden inneren der Knotenplatten 132c, eine Schwingungslänge eines durch das dritte Messrohr 110c und das vierte Messrohr 110d gebildeten zweiten Messrohrpaar festgelegt ist, welche wiederum insbesondere die Nutzmodeeigenfrequenz, mit welcher das zweite Messrohrpaar anzuregen ist. Weitere Knotenplatten 134a, 134c, die jeweils zwischen den inneren Knotenplatten 132a, 132c und den Sammlern 120 angeordnet sind, dienen dazu, weitere Schwingungsknoten zu definieren, um einerseits die mechanischen Maximalspannungen an den schwingenden Messrohren zu reduzieren, und andererseits den Austausch von Schwingungsenergie zwischen dem Massedurchflussmessgerät und der Rohrleitung zu minimieren. Die freie Schwingungslänge der Messrohre 110a, 110b des ersten Messrohrpaars ist wesentlich größer als die freie Schwingungslänge der Messrohre 110c, 110d des zweiten Messrohrpaars, wobei die Messrohre 110a, 110b des ersten Messrohrpaars Oszillators in einem höheren Bogen geführt sind, als die Messrohre 110c, 110d des zweiten Messrohrpaars. Bei dem dargestellten Massedurchflussmessgerät, welches Messrohre mit einem Außendurchmesser von 3 Zoll, also etwa 76 mm und einer Wandstärke von 3,6 mm aufweist, weisen die Messrohrpaare bei einer Befüllung der Messrohre mit einem Medium mit einer Dichte von Wasser eine Nutzmodeeigenfrequenz von etwa 110 Hz und 160 Hz auf.

Zum Anregen der Biegeschwingungsnutzmoden der Messrohrpaare sind zwischen dem ersten Messrohr 110a und dem zweiten Messrohr 110b des eine erste Erregeranordnung 140a und zwischen dem dritten Messrohr 110c und dem vierten Messrohr 110d eine zweite Erregeranordnung 140c vorgesehen, beispielsweise jeweils eine induktive Erregeranordnung, die eine Tauchspule an einem Messrohr und einen Tauchkörper am gegenüberliegenden Messrohr des Messrohrpaares umfasst.

Zum Erfassen der Schwingungen der Messrohrpaare der Mesrohrpaare sind in Längsrichtung symmetrisch zu den Erregeranordnungen 140a, 140c jeweils eine erste Sensoranordnung 142a-1, 142c-1 und eine zweite Sensoranordnung 142a-2, 142c-2 mit jeweils einem einlaufseitigen und einem auslaufseitigen Schwingungssensor vorgesehen, die jeweils als induktive Anordnung mit einer Tauchspule an einem Messrohr und einem Tauchkörper am anderen Messrohr gestaltet sind. Einzelheiten dazu sind dem Fachmann bekannt, und brauchen hier nicht näher erläutert zu werden. Im Sinne der Übersichtlichkeit wurden die Positionen des Erregeranordnung und der Sensoranordnungen lediglich in Fig. 1b dargestellt und mit Bezugszeichen versehen.

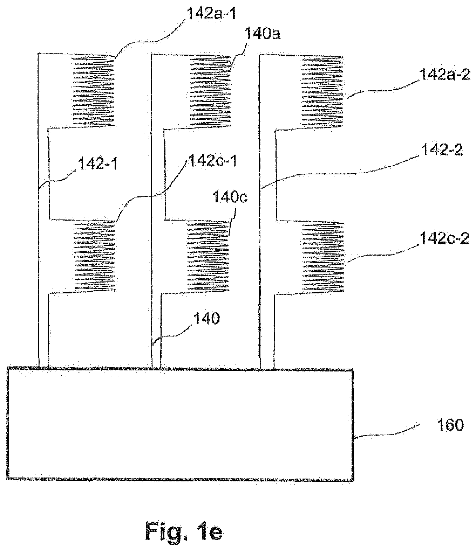

Die Messrohrpaare sind jeweils mit ihrer aktuellen Nutzmodeeigenfrequenz anzuregen, wobei hierzu die Erregeranordnungen 140a, 140c der beiden Messrohrpaare über eine Erregerleiterschleife 140 in Reihe geschaltet an die Betriebs- und Auswerteschaltung 160 angeschlossen sind, wie in Fig. 1e schematisch dargestellt ist, so dass die Erregeranordnungen mit einem überlagerten Signal der Nutzmodeeigenfrequenzen beider Messrohrpaare beaufschlagt werden können.

Die beiden einlaufseitigen Schwingungssensoren 142a-1 und 142c-1 sind über eine einlaufseitige Sensorleiterschleife 142-1 und die beiden einlaufseitigen Schwingungssensoren 142a-2 und 142c-2 über eine auslaufseitige Sensorleiterschleife 142-2 in Reihe geschaltet.

Die beiden Sensorleiterschleifen 142-1, 142-2 sind an die Betriebs- und Auswerteschaltung 160 angeschlossen, welche dazu eingerichtet ist, die Erregerleiterschleife 140 zu treiben und die Signale der beiden Sensorleiterschleifen 142-1, 142-2 zu erfassen und auszuwerten.

Aufgrund der hohen Güte der Messrohrpaare weisen die Resonanzschwingungen bei der jeweiligen Nutzmodeeigenfrequenz eine um ein Vielfaches größere Amplitude auf als die erzwungenen Schwingungen außer Resonanz bei der Nutzmodeeigenfrequenz des jeweils anderen Messrohrpaares. Dennoch können die erzwungenen Schwingungen außer Resonanz einen Nullpunktfehler bewirken, wenn die Sensorsignale der beiden Messrohrpaare aufgrund von Fertigungstoleranzen unterschiedliche Signalamplitudendifferenzen zwischen den Signalen der einlaufseitigen und auslaufseitigen Schwingungssensoren aufweisen.

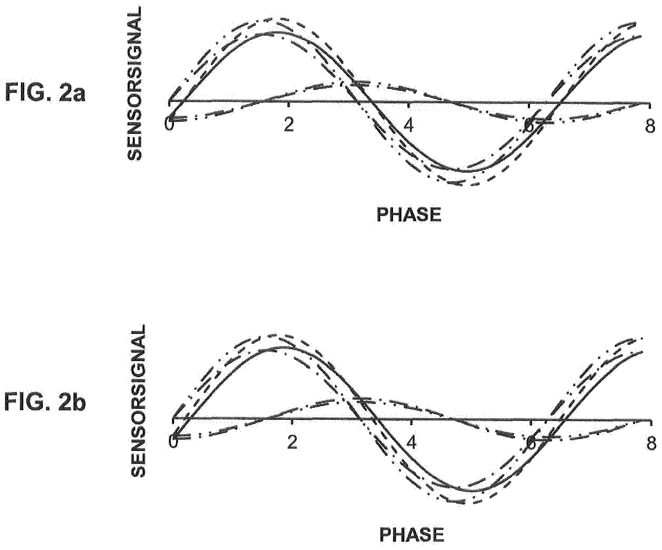

Die Resonanzschwingenen haben ihre maximale Amplitude bei einem Phasenwinkel von $\pi/2$ zwischen dem Erregersignal und der Auslenkung. Die erzwungenen Schwingungen außer Resonanz haben dagegen einen Phasenwinkel von 0 bzw. $\pi$ zwischen dem Erregersignal und der Auslenkung. Die überlagerte Schwingung eines Messrohrpaares bei der Nutzmodeeigenfrequenz des anderen Messrohrpaares weist also gegenüber dessen Resonanzschwingung eine Phasenverschiebug um $\pm \pi/2$ auf. Da die Signale Schwingungssensoren beider Messrohrpaare über gemeinsame Sensorschleifen erfasst werden, sind bei der Nutzmodeeigenfrequenz eines Messrohrpaares die Signale der Schwingungssensoren dieses in Resonanz schwingenden Messrohrpaares sowie die Signale der Schwingungssensoren der erzwungenen Schwingungen des anderen Messrohrpaares überlagert, wobei letztere um $\pm \pi/2$ gegenüber ersteren verschobenen sind. Zur Erläuterung des Sachverhalts sind entsprechende Signalverläufe in Fign. 2a und 2b für einen Durchfluss von Null dargestellt, wobei zur Vereinfachung beide Messrohrpaare nur mit der Nutzmodeeigenfrequenz eines Messrohrpaares angeregt sind. Die einfach punktierten Linien zeigen jeweils den isolierten Signalverlauf der einlaufseitigen Schwingungssensoren. Die doppelt punktierten Linien zeigen jeweils einen isolierten Signalverlauf der auslaufseitigen Schwingungssensoren. Die durchgezogenen Linien zeigen den überlagerten Signalverlauf der einlaufseitigen Schwingungssensoren, welcher tatsächlich über einlaufseitige Sensorschleife erfasst wird. Die gestrichelten Linien zeigen den überlagerten Signalverlauf der auslaufseitigen Schwingungssensoren, welcher tatsächlich über auslaufseitige Sensorschleife erfasst wird.

Fig. 2a zeigt unterschiedliche Signalamplituden für die einlaufseitigen und auslaufseitigen Schwingungssensoren, wobei das Verhältnis der Signalamplitude eines einlaufseitigen Sensors und der Signalamplitude des zugehörigen auslaufseitigen Sensors für beide Messrohrpaare gleich ist. In diesem Fall wirken sich nicht auf die Phasenbeziehung zwischen den überlagerten einlaufseitigen und auslaufseitigen Signalen aus. Diese haben bei einem Durchfluss von Null gleichzeitige Nulldurchgänge.

Wenn dagegen, wie in Fig. 2b dargestellt, das Verhältnis der Signalamplitude eines einlaufseitigen Sensors und der Signalamplitude des zugehörigen auslaufseitigen Sensors des einen Messrohrpaares von dem des anderen abweicht, führt dies zu einer Phasendifferenz zwischen den überlagerten auslaufseitigen und auslaufseitigen Signalen, die - dem Messprinzip entsprechend - einen Nullpunktfehler verursacht, wenn keine weiteren Maßnahmen ergriffen werden.

Bei dem erfindungsgemäßen Massedurchflussmessgerät ist ein Angleichen der Signalamplitudendifferenzen durch Trimmen der Empfindlichkeit eines Schwingungssensors erfolgt, so dass der Betrag der Differenzabweichung $D = |delta_1 - delta_2|$ der zweiten relativen Signalamplitudendifferenz von der ersten relativen Signalamplitudendifferenz $delta_1$ nicht mehr als einen Toleranzwert $D_T$ beträgt, also $D \leq D_T$, wobei gilt $D_T < 2\%$, insbesondere $D_T < 1\%$.

Auf diese Weise wird der Zustand in Fig. 2a angenähert, bei dem der Nullpunktfehler eliminiert ist, obwohl jedes der Messrohrpaare eine nicht verschwindende relative Signalamplitudendifferenz aufweist.

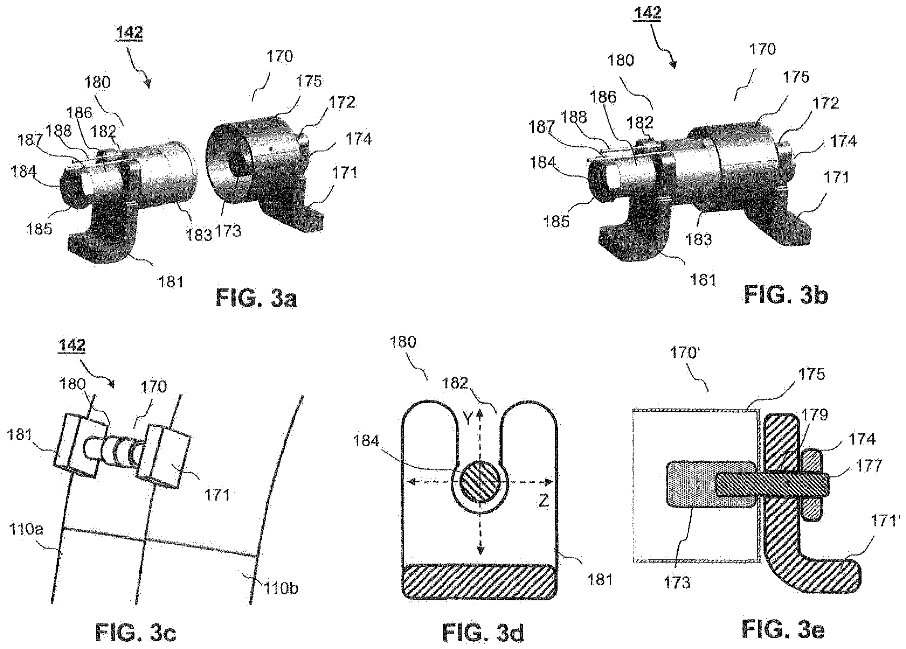

Ein konstruktiver Ansatz welcher eine Anpassung der Signalamplitudendifferenzen ermöglicht, wird nun anhand der Fign. 3a bis 3d erläutert, welche Komponenten eines Schwingungssensors 142 eines Ausführungsbeispiels eines erfindungsgemäßen Massedurchflussmessgerätes darstellen. Im Wesentlichen haben die vier Schwingungssensoren 142a-1, 142c-1, 142a-2, 142c-2 eines Messaufnehmers den gleichen Aufbau, wie er hier zusammenfassend unter dem Bezugszeichen 142 beschrieben ist.

Der Schwingungssensor 142 weist einen Magnetteil 170 und einen Tauchspulenteil 180 auf, wobei der Magnetteil 170 und der Spulenteil 180 weisen einen Magnethalter 171 bzw. Spulenhalter 181 auf, die jeweils mir ihrer Basis an einem Messrohr 110a, 110b gefügt sind, insbesondere durch Schweißen oder Hartlöten. Der Spulenhalter 181 weist, an seiner der Basis abgewandten Oberseite eine Spulenhalteraufnahmegabel 182 auf. Der Spulenteil 180 umfasst weiterhin einen im Wesentlichen zylindrischen Tauchspulenkörper 183, auf der eine zylindrische Tauchspule umfasst, die an einer dem Spulenhalter 181 abgewandten Stirnseite eine Tauchöffnung aufweist, in welche ein zylindrischer Stabmagnet 173 des Magnetteils 170 zumindest teilweise eintauchen kann.

Aus dem Spulenkörper ragen zwei Kontaktstifte 187, 188 heraus, über welche die Spule zu kontaktieren und an eine Sensorschleife anzuschließen ist. An einer der Tauchöffnung der Spule abgewandten Stirnseite weist der Spulenkörper 183 einen Gewindebolzen 184 auf, welcher in die Spulenhalteraufnahmegabel 182 eingelegt und mittels einer Mutter 185 fixiert ist, wobei zwischen der Mutter 185 und dem Spulenhalter 181 eine den Gewindebolzen umgreifende, elastische Spannhülse 186 axial eingespannt ist. Der Gewindebolzen 184 hat lateral Spiel in der Spulenhalteraufnahmegabel 182, so dass er im Umfang des Spiels in Z-Richtung also parallel zur Messrohrachse und /oder in Y-Richtung, also in radialer Richtung des Messrohrs verschoben werden kann. Der Magnethalter 171 hat im Wesentlichen den gleichen Aufbau wie der Spulenhalter 181. Er weist also eine Magnethalteraufnahmegabel 172 auf, in welcher ein Gewindebolzen eingelegt und mit einer Mutter 174 am Magnethalter fixiert ist. Der Gewindebolzen trägt an seinem dem Spulenteil zugewandten Endabschnitt den zylindrischen Stabmagneten 173. Weiterhin trägt der Gewindebolzen eine Schirmblechhülse 175 welche den Spulenkörper 183 zumindest abschnittsweise umgibt, um den Einfluss externer Felder auf den Schwingungssensor 142 zu unterdrücken. Der Gewindebolzen hat lateral Spiel in der Magnethalteraufnahmegabel 172, so dass er im Umfang des Spiels in Z-Richtung also parallel zur Messrohrachse und /oder in Y-Richtung, also in radialer Richtung des Messrohrs verschoben werden kann. Mit den beschriebenen Freiheitsgraden, kann durch laterales Verschieben eines oder beider Gewindebolzen in der Magnethalteraufnahmegabel 172 bzw. der Spulenhalteraufnahmegabel 182 einerseits eingestellt werden, zu welchem Grad der Stabmagnet 173 und der Spulenkörper 183 koaxial zueinander ausgerichtet sind. Weiterhin kann durch paralleles laterales Verschieben beider Gewindebolzen, die Position des Schwingungssensors bezüglich des Messrohrs in dessen Längsrichtung bzw. in dessen radialer Richtung variieren. Jede dieser Verschiebungen ist geeignet, die Sensorsignalamplitude eines Schwingungssensors zu variieren.

Fig. 3e zeigt eine Alternative für die Gestaltung eines Magnetteils 170' eines Schwingungssensors 142. Hierbei weist ein Magnethalter 171' eine Gewindebohrung 179 auf, in welche ein den Stabmagneten 173 tragender Gewindebolzen 177 eingeschraubt und mit einer Kontermutter 174 gesichert ist. Der Gewindebolzen 177 trägt, wie zuvor beschrieben, die Schirmblechhülse 175. Durch Verdrehen des Gewindebolzens 177 kann nun der Abstand des Stabmagneten 173 zum Spulenkörper 183 kontrolliert eingestellt werden. Zu einer Variation des Grades der koaxialen Ausrichtung von Stabmagnet 173 und Spulenkörper 183 kann der Spulenteil 170' nichts beitragen. Hierzu ist die zuvor beschriebene laterale Verschiebung des Gewindebolzens 184 erforderlich, welcher den Spulenkörper 183 trägt. Mit dem Magnetteil 170' ist eine Verschiebung des gesamten Schwingungssensors 142 in Richtung der Längsachse des Messrohrs oder in radialer Richtung des Messrohrs nicht möglich. Selbstverständlich können die Strukturen von Spulenhalter und Magnethalter vertauscht werden, d.h. der Spulenhalter weist eine Gewindebohrung auf, und der Magnethalter ist mit einer Aufnahmegabel versehen. Gleichermaßen können sowohl Magnethalter als auch Spulenhalter mit einer Gewindebohrung versehen sein, womit dann allerdings nur eine Kontrolle des Abstands zwischen Spulenteil und magnetteil möglich ist. Schließlich kann eine der Komponenten, beispielsweise der Spulenteil vollständig fixiert sein, so dass die Variation der Signalamplitude eines Schwingungssensors nur über eine Variation der Position der anderen Komponente, beispielsweise des Spulenteils erfolgen kann.

Vorzugsweise weisen beide Komponenten eines Schwingungssensors die gleiche Masse auf, um eine Massebalance zwischen den Messrohren nicht zu beeinträchtigen.

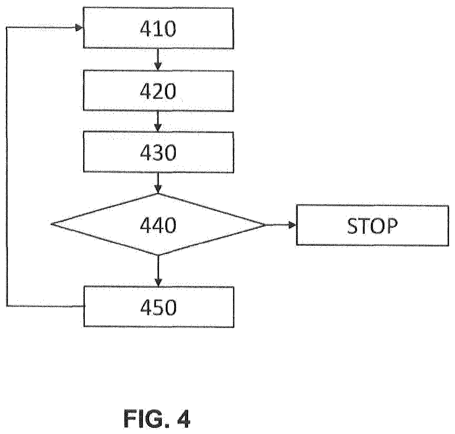

Wie in Fig. 4 dargestellt, umfasst ein Ausführungsbeispiel des erfindungsgemäßen Verfahrens die folgenden Schritte:

in einem ersten Schritt 410 werden die Messrohre beider Messrohrpaare gleichzeitig mit einer ersten Nutzmodeeigenfrequenz f1 und der zweiten Nutzmodeeigenfrequenz f2 angeregt, wobei die Nutzmodeeigenfrequenzen durch Maximieren der jeweiligen Sensorsignalamplituden identifiziert werden.

In einem zweiten Schritt 420 werden die Sensorsignalamplituden aller vier Schwingungssensoren ermittelt, also:

die überlagerten Sensorsignalamplituden der einlaufseitigen Schwingungssensoren bei Schwingungen der Messrohre mit der der ersten Nutzmodeeigenfrequenz f1;

die überlagerten Sensorsignalamplituden der auslaufseitigen Schwingungssensoren bei Schwingungen der Messrohre mit der der ersten Nutzmodeeigenfrequenz f1;

die überlagerten Sensorsignalamplituden der einlaufseitigen Schwingungssensoren bei Schwingungen der Messrohre mit der der zweiten Nutzmodeeigenfrequenz f2;

die überlagerten Sensorsignalamplituden der auslaufseitigen Schwingungssensoren bei Schwingungen der Messrohre mit der der zweiten Nutzmodeeigenfrequenz f2;

In einem dritten Schritt 430 wird eine erste relative Signalamplitudendifferenz $delta_1$ zwischen den Signalen der einlaufseitigen Schwingungssensoren und den Signalen der auslaufseitigen Schwingungssensoren bei Schwingungen der Messrohre mit der ersten Nutzmodeeigenfrequenz ermittelt, und eine zweite relative Signalamplitudendifferenz $delta_2$ zwischen den Signalen

der einlaufseitigen Schwingungssensoren und den Signalen der auslaufseitigen Schwingungssensoren bei Schwingungen der Messrohre mit der der zweiten Nutzmodeeigenfrequenz wird ermittelt. Hierzu wird jeweils die doppelte Differenz durch die Summe der Signale geteilt.

Die überlagerten Signalamplituden bei der ersten Nutzmodeeigenfrequenz sowie die erste relative Signalamplitudendifferenz $delta_1$ werden jeweils den Sensoren des ersten Messrohrpaars zugeordnet. Die Signalamplituden bei der zweiten Nutzmodeeigenfrequenz sowie die zweite relative Signalamplitudendifferenz $delta_2$ werden den Sensoren des zweiten Messohrpaars zugeordnet.

In einem vierten Schritt 440 wird überprüft, ob eine Differenzabweichung $D = |delta_1 - delta_2|$ zwischen der ersten Signalamplitudendifferenz von der zweiten Signalamplitudendifferenz einen Toleranzwert übersteigt.

Wenn dies nicht der Fall ist, ist das Verfahren beendet.

Wenn dies der Fall ist, erfolgt in einem fünften Schritt 450 ein Angleichen der Signalamplitudendifferenzen durch Trimmen der Empfindlichkeit mindestens eines Schwingungssensors.

Das Trimmen kann durch Variieren der Position einer Komponente eines Schwingungssensors erfolgen, beispielsweise durch den Grad der Koaxialität zwischen Spulenkörper und Stabmagnet eines Schwingungssensors und/oder durch Verändern des Abstands zwischen diesen Komponenten. Weiterhin können beide Komponenten eines Schwingungssensors parallel zur Messrohrachse oder senkrecht dazu gemeinsam verschoben werden um die Schwingungsamplitude des Sensors zu variieren, was sich wiederum auf die Sensorsignalamplitude auswirkt.

Nach dem Trimmen eines Schwingungssensors wird das Verfahren wiederholt, um zu prüfen ob die Differenzabweichung innerhalb des Toleranzbereichs liegt.

Zum Trimmen kann beispielsweise der Schwingungssensor gewählt werden dessen Signalamplitude am stärksten von der Signalamplitude der anderen Schwingungssensoren abweicht, oder es kann der Sensor mit der kleinsten Signalamplitude gewählt werden.

**Patentansprüche**

1. Massedurchflussmessgerät (100) nach dem Coriolis-Prinzip, zum Bestimmen eines Massedurchflussmesswerts eines das Massedurchflussmessgerät durchströmenden Mediums, umfassend:

ein erstes Messrohrpaar (110a, 110b) mit zwei gegeneinander schwingfähig gelagerten Messrohren mit einer Biegeschwingungsnutzmode, die eine erste medienabhängige Nutzmodeeigenfrequenz f1 aufweist;
einen ersten elektrodynamischen Erreger (140a) zum Anregen von Biegeschwingungen zwischen den Messrohren des ersten Messrohrpaares (110a, 110b),

ein erstes Schwingungssensorpaar mit einem ersten einlaufseitigen Schwingungssensor (142a-1) und einem ersten auslaufseitigen Schwingungssensor (142a-2) zum Erfassen von Biegeschwingungen an zwei Positionen des ersten Messrohrpaares (110a, 110b);

ein zweites Messrohrpaar mit zwei gegeneinander schwingfähig gelagerten Messrohren (110c, 110d) mit einer Biegeschwingungsnutzmode, die eine zweite medienabhängige Nutzmodeeigenfrequenz f2 aufweist,

einen zweiten elektrodynamischen Erreger (140c) zum Anregen von Biegeschwingungen zwischen den Messrohren des zweiten Messrohrpaares;

ein zweites Schwingungssensorpaar mit einem zweiten einlaufseitigen Schwingungssensor (142c-1) und einem zweiten auslaufseitigen Schwingungssensor (142c-2) zum Erfassen von Biegeschwingungen an zwei Positionen des zweiten Messrohrpaares;

eine Betriebs- und Auswerteschaltung (160); zum Treiben des ersten und zweiten elektrodynamischen Erregers (140a, 140c) mit einem gemeinsamen Erregersignal, und zum Erfassen von Signalen der Schwingungssensoren (142a-1, 142a-2, 142c-1, 142c-2); zum Ermitteln von durchflussabhängigen Phasendifferenzen zwischen den Signalen der einlaufseitigen und auslaufseitigen Schwingungssensoren eines der Schwingungssensorpaare und zum Ermitteln von Massedurchflussmesswerten auf Basis dieser durchflussabhängigen Phasendifferenzen; wobei das Erregersignal, welches ein überlagertes Signal der Nutzmodeeigenfrequenzen f1, f2 beider Messrohrpaare umfasst, zum Anregen der Biegeschwingungsnutzmoden beider Messrohrpaare dient;

wobei Resonanzschwingungen bei der jeweiligen Nutzmodeeigenfrequenz f1, f2 eines Messrohrpaares eine um ein Vielfaches größere Amplitude aufweisen als die erzwungenen Schwingungen außer Resonanz bei der Nutzmodeeigenfrequenz f2, f1 des jeweils anderen Messrohrpaares;

wobei ein Erregersignalpfad dazu eingerichtet ist, das Erregersignal zum ersten und zweiten elektrodynamischen Erreger zu übertragen;

wobei ein einlaufseitiger Sensorsignalpfad dazu eingerichtet ist, Signale des ersten und des zweiten einlaufseitigen Schwingungssensors überlagert zu übertragen;

wobei ein auslaufseitiger Sensorsignalpfad dazu eingerichtet ist, Signale des ersten und des zweiten auslaufseitigen Schwingungssensors überlagert zu übertragen;

wobei die Sensorsignale bei Schwingungen mit der der ersten Nutzmodeeigenfrequenz f1 eine erste relative Signalamplitudendifferenz delta$_1$ zwischen den Signalen der einlaufseitigen Sensoren und den Signalen der auslaufseitigen Sensoren aufweisen,

wobei die Sensorsignale bei Schwingungen mit der der zweiten Nutzmodeeigenfrequenz f2 eine zweite relative Signalamplitudendifferenz delta$_2$ zwischen den Signalen der einlaufseitigen Sensoren und den Signalen der auslaufseitigen Sensoren aufweisen,

wobei der Betrag der Differenzabweichung D = |delta$_1$ - delta$_2$| der zweiten relativen Signalamplitudendifferenz von der ersten relativen Signalamplitudendifferenz delta$_1$ nicht mehr als einen Toleranzwert D$_T$ beträgt, also D ≤ D$_T$, wobei gilt D$_T$ < 2%, insbesondere D$_T$ < 1%.

2. Massedurchflussmessgerät nach Anspruch 1, wobei die relative Signalamplitudendifferenz delta$_i$ zwischen den Signalamplituden der Schwingungssensoren des i-ten Messrohrpaares bei Schwingungen mit dessen Nutzmodeeigenfrequenz fi definiert ist als:

$$delta_i = \frac{2 \cdot (A_{in,i} - A_{out,i})}{A_{in,i} + A_{out,i}}.$$

3. Massedurchflussmessgerät nach Anspruch 1 oder 2, wobei der Toleranzwert D$_T$ der Differenzabweichung nicht mehr als 0,5%, beispielsweise nicht mehr als 0,2%, insbesondere nicht mehr als 0,1% beträgt.

4. Massedurchflussmessgerät nach einem der vorhergehenden Ansprüche, wobei der absolute Betrag der Differenzabweichung geteilt durch die Summe der absoluten Beträge der relativen Signalamplitudendifferenz nicht mehr als 0,5 beträgt, beispielsweise nicht mehr als 0,3 insbesondere nicht mehr als 0,2.

5. Verfahren zum Nullpunktabgleich eines Massedurchflussmessgeräts nach dem Coriolis-Prinzip, zum Bestimmen eines Massedurchflussmesswerts eines das Massedurchflussmessgerät durchströmenden Mediums, welches Durchflussmessgerät umfasst:

ein erstes Messrohrpaar mit zwei gegeneinander schwingfähig gelagerten Messrohren mit einer Biegeschwingungsnutzmode, die eine erste medienabhängige Nutzmodeeigenfrequenz f1 aufweist;

einen ersten elektrodynamischen Erreger zum Anregen von Biegeschwingungen zwischen den Messrohren des ersten Messrohrpaares, ein erstes Schwingungssensorpaar mit einem ersten einlaufseitigen Schwingungssensor und einem ersten auslaufseitigen Schwingungssensor zum Erfassen von Biegeschwingungen an zwei Positionen des ersten Messrohrpaares; ein zweites Messrohrpaar mit zwei gegeneinander schwingfähig gelagerten Messrohren mit einer Biegeschwingungsnutzmode, die eine zweite medienabhängige Nutzmodeeigenfrequenz f2 aufweist, einen zweiten elektrodynamischen Erreger zum Anregen von Biegeschwingungen zwischen den Messrohren des zweiten Messrohrpaares; ein zweites Schwingungssensorpaar mit einem zweiten einlaufseitigen Schwingungssensor und einem zweiten auslaufseitigen Schwingungssensor zum Erfassen von Biegeschwingungen an zwei Positionen des zweiten Messrohrpaares; eine Betriebs- und Auswerteschaltung; zum Treiben des ersten und zweiten elektrodynamischen Erregers mit einem gemeinsamen Erregersignal, und zum Erfassen von Signalen der Schwingungssensoren; zum Ermitteln von durchflussabhängigen Phasendifferenzen zwischen den Signalen der einlaufseitigen und auslaufseitigen Schwingungssensoren eines der Schwingungssensorpaare und zum Ermitteln von Massedurchflussmesswerten auf Basis dieser durchflussabhängigen Phasendifferenzen; wobei das Erregersignal zum Anregen der Biegeschwingungsnutzmoden beider Messrohrpaare dient; wobei ein Erregersignalpfad dazu eingerichtet ist, das Erregersignal zum ersten und zweiten elektrodynamischen Erreger zu übertragen; wobei ein einlaufseitiger Sensorsignalpfad dazu eingerichtet ist, Signale des ersten und des zweiten einlaufseitigen Schwingungssensors überlagert zu übertragen; wobei ein auslaufseitiger Sensorsignalpfad dazu eingerichtet ist, Signale des ersten und des zweiten auslaufseitigen Schwingungssensors überlagert zu übertragen; wobei das Verfahren die folgenden Schritte umfasst:

Ermitteln von Sensorsignalamplituden der einlaufseitigen Schwingungssensoren bei Schwingungen der Messrohre mit der der ersten Nutzmodeeigenfrequenz f1; Ermitteln von Sensorsignalamplituden der auslaufseitigen Schwingungssensoren bei Schwingungen der Messrohre mit der der ersten Nutzmodeeigenfrequenz f1;

Ermitteln von Sensorsignalamplituden der einlaufseitigen Schwingungssensoren bei Schwingungen der Messrohre mit der der zweiten Nutzmodeeigenfrequenz f2; Ermitteln von Sensorsignalamplituden der auslaufseitigen Schwingungssensoren bei Schwingungen der Messrohre mit der der zweiten Nutzmodeeigenfrequenz f2; Ermitteln einer ersten relativen Signalamplitudendifferenz zwischen den Signalen der einlaufseitigen Schwingungssensoren und den Signalen der auslaufseitigen Schwingungssensoren bei Schwingungen der Messrohre mit der der ersten Nutzmodeeigenfrequenz, Ermitteln einer zweiten relativen Signalamplitudendifferenz zwischen den Signalen der einlaufseitigen Schwingungssensoren und den Signalen der auslaufseitigen Schwingungssensoren bei Schwingungen der Messrohre mit der der zweiten Nutzmodeeigenfrequenz, Vergleichen der ersten relativen Signalamplitudendifferenz mit der zweiten relativen Signalamplitudendifferenz; und ggf. Angleichen der Signalamplitudendifferenzen durch Trimmen der Empfindlichkeit mindestens eines Schwingungssensors, so dass der Betrag einer Differenzabweichung zwischen der ersten Signalamplitudendifferenz und der zweiten Signalamplitudendifferenz nicht mehr als einen Toleranzwert $D_T$, wobei gilt $D_T < 1\%$.

6. Verfahren nach Anspruch 5, wobei der Toleranzwert der Differenzabweichung $D_T$ nicht mehr als 0,5%, beispielsweise nicht mehr als 0,2%, insbesondere nicht mehr als 0,1% beträgt.

7. Verfahren nach Anspruch 5 oder 6, wobei der Betrag der Differenzabweichung geteilt durch die Summe der Beträge der Signalamplitudendifferenz nicht mehr als 0,5, beispielsweise nicht mehr als 0,3 insbesondere nicht mehr als 0,2 beträgt.

8. Verfahren nach einem der Ansprüche 5 bis 7, wobei das Trimmen der Empfindlichkeit des mindestens einen Schwingungssensors das Variieren einer relativen Position zwischen einem Magneten und einer Spule des Schwingungssensors umfasst.

9. Verfahren nach einem der Ansprüche 5 bis 8, wobei das Trimmen der Empfindlichkeit des einen Schwingungssensors das Variieren eines Ruhelagenabstands zwischen einem Magneten und einer Spule des mindestens einen Schwingungssensors.

10. Verfahren nach einem der Ansprüche 5 bis 9, wobei das Trimmen der Empfindlichkeit des mindestens einen Schwingungssensors das Variieren eines Grades koaxialer Ausrichtung zwischen einem Magneten und einer Spule des mindestens einen Schwingungssensors umfasst.

11. Verfahren nach einem der Ansprüche 5 bis 10, wobei das Trimmen der Empfindlichkeit des mindestens einen Schwingungssensors durch Variieren der Position des Schwingungssensors in Richtung der Längsachse des Messrohrs umfasst.

12. Verfahren nach einem der Ansprüche 5 bis 11, wobei das Trimmen der Empfindlichkeit des mindestens einen Schwingungssensors durch Variieren der Position des Schwingungssensors senkrecht zur Richtung der Längsachse des Messrohrs umfasst.

13. Verfahren nach einem der Ansprüche 5 bis 12, wobei das Trimmen der Empfindlichkeit des mindestens einen Schwingungssensors durch Variieren der wirksamen Windungszahl der Spule des Schwingungssensors umfasst.

14. Verfahren nach einem der Ansprüche 5 bis 13, wobei das Angleichen der Signalamplitudendifferenzen durch Trimmen der Empfindlichkeit genau eines Schwingungssensors umfasst.

**Claims**

1. Mass flowmeter (100) according to the Coriolis principle, wherein said flowmeter is designed to determine a mass flow measured value of a medium flowing through the mass flowmeter, wherein said mass flowmeter comprises:

a first measuring tube pair (110a, 110b) with two measuring tubes mounted in a way that they can vibrate in relation to one another with a bending vibration useful mode, wherein said mode has a medium-dependent first useful mode natural frequency $f_1$ ;
a first electrodynamic exciter (140a) designed to generate bending vibrations between the measuring tubes of the first measuring tube pair (110a, 110b),
a first vibration sensor pair with a first vibration sensor on the inlet side (142a-1) and a first vibration sensor on the outlet side (142a-2), wherein the sensors are designed to measure bending vibrations at two positions of the first measuring tube pair (110a, 110b);
a second measuring tube pair with two measuring tubes (110c, 110d) mounted in a way that they can vibrate in relation to one another with a bending vibration useful mode, wherein said mode has a medium-dependent second useful mode natural frequency $f_2$,
a second electrodynamic exciter (140c) designed to generate bending vibrations between the measuring tubes of the second measuring tube pair;
a second vibration sensor pair comprising a second vibration sensor on the inlet side (142c-1) and a second vibration sensor on the outlet side (142c-2), wherein said sensors are designed to measure bending vibrations at two positions of the second measuring tube pair;
an operating and evaluation circuit (160) designed to

- operate the first and second electrodynamic exciters (140a, 140c) with a common excitation signal,
- measure the signals of the vibration sensors (142a-1, 142a-2, 142c-1, 142c-2),
- determine the flow-dependent phase differences between the signals of the vibration sensors on the inlet side and the outlet side of one of the vibration sensor pairs and to
- determine mass flow measured values on the basis of these flow-dependent phase differences;

wherein the exciter signal - which comprises a superimposed signal of the useful mode natural frequencies $f_1$, $f_2$ of the two pairs of measuring tubes - serves to excite the bending vibration useful modes of the two pairs of measuring tubes;
wherein resonance vibrations in the respective useful mode natural frequency $f_1$, $f_2$ of a measuring tube pair have an amplitude several times greater than the forced vibrations out of resonance in the useful mode natural frequency $f_2$, $f_1$ of the other respective measuring tube pair;
wherein an exciter signal path serves to transmit the exciter signal to the first and to the second electrodynamic exciter;
wherein a sensor signal path on the inlet side serves to transmit, in a superimposed manner, signals of the first and second vibration sensor on the inlet side;
wherein a sensor signal path on the outlet side serves to transmit, in a superimposed manner, signals of the first and second vibration sensor on the outlet side;
wherein, during vibrations at the first useful mode natural frequency $f_1$, the sensor signals have a first relative signal amplitude difference $delta_1$ between the signals of the sensors on the inlet side and the signals of the sensors on the outlet side,

wherein, during vibrations at the second useful mode natural frequency f2, the sensor signals have a second relative signal amplitude difference delta$_2$ between the signals of the sensors on the inlet side and the signals of the sensors on the outlet side,

wherein the absolute value of the differential deviation D = |delta$_1$ - delta$_2$| of the second relative signal amplitude difference delta$_2$ from the first relative signal amplitude difference delta$_1$ is not greater than a tolerance value D$_T$, i.e. D ≤ D$_T$, wherein D$_T$ is < 2 %, D$_T$ particularly D$_T$ < 1 %.

2. Mass flowmeter as claimed in Claim 1, wherein the relative signal amplitude difference delta$_i$ between the signal amplitudes of the vibration sensors of the i-th measuring tube pair during vibrations at its useful mode natural frequency fi is defined as:

$$delta_i = \frac{2 \cdot (A_{in,i} - A_{out,i})}{A_{in,i} + A_{out,i}}.$$

3. Mass flowmeter as claimed in Claim 1 or 2, wherein the tolerance value Di of the differential deviation is not greater than 0.5 %, for example not greater than 0.2 %, particularly not greater than 0.1 %.

4. Mass flowmeter as claimed in one of the previous claims, wherein the absolute value of the differential deviation divided by the sum of the absolute values of the relative signal amplitude difference is not greater than 0.5, for example not greater than 0.3, particularly not greater than 0.2.

5. Procedure for the zero-point adjustment of a mass flowmeter according to the Coriolis principle, wherein said procedure is designed to determine a mass flow measured value of a medium flowing through the mass flowmeter, said mass flowmeter comprising:

a first measuring tube pair with two measuring tubes mounted in a way that they can vibrate in relation to one another with a bending vibration useful mode, which has a medium-dependent first useful mode natural frequency f1;
a first electrodynamic exciter designed to generate bending vibrations between the measuring tubes of the first measuring tube pair,
a first vibration sensor pair with a first vibration sensor on the inlet side and a first vibration sensor on the outlet side, wherein said sensors are designed to measure bending vibrations at two positions of the first measuring tube pair;
a second measuring tube pair with two measuring tubes mounted in a way that they can vibrate in relation to one another with a bending vibration useful mode, wherein said mode has a medium-dependent second useful mode natural frequency f2,
a second electrodynamic exciter designed to generate bending vibrations between the measuring tubes of the second measuring tube pair;
a second vibration sensor pair with a second vibration sensor on the inlet side and a second vibration sensor on the outlet side, wherein said sensors are designed to measure bending vibrations at two positions of the second measuring tube pair;
an operating and evaluation circuit designed to operate the first and the second electrodynamic exciter with a common excitation signal, wherein said circuit is designed to

- measure signals of the vibration sensors
- determine flow-dependent phase differences between the signals of the vibration sensors on the inlet side and on the outlet side of one of the vibration sensor pairs and to
- determine mass flow measured values on the basis of these flow-dependent phase differences;

wherein the exciter signal serves to excite the bending vibration useful modes of the two pairs of measuring tubes;
wherein an exciter signal path serves to transmit the exciter signal to the first and to the second electrodynamic exciter;
wherein a sensor signal path on the inlet side serves to transmit, in a superimposed manner, signals of the first and of the second vibration sensor on the inlet side;
wherein a sensor signal path on the outlet side serves to transmit, in a superimposed manner, signals of the first and of the second vibration sensor on the outlet side;
wherein the procedure comprises the following steps:

Determination of sensor signal amplitudes of the vibration sensors on the inlet side when the measuring tubes are vibrating at the first useful mode natural frequency f1;
Determination of sensor signal amplitudes of the vibration sensors on the outlet side when the measuring tubes are vibrating at the first useful mode natural frequency f1;
Determination of sensor signal amplitudes of the vibration sensors on the inlet side when the measuring tubes are vibrating at the second useful mode natural frequency f2;
Determination of sensor signal amplitudes of the vibration sensors on the outlet side when the measuring tubes are vibrating at the second useful mode natural frequency f2;

Determination of a first relative signal amplitude difference between the signals of the vibration sensors on the inlet side and the signals of the vibration sensors on the outlet side when the measuring tubes are vibrating at the first useful mode natural frequency,

Determination of a second relative signal amplitude difference between the signals of the vibration sensors on the inlet side and the signals of the vibration sensors on the outlet side when the measuring tubes are vibrating at the second useful mode natural frequency,

Comparison of the first relative signal amplitude difference with the second relative signal amplitude difference; and where applicable,

Adjustment of the signal amplitude differences by trimming the sensitivity of at least a vibration sensor such that the absolute value of a differential deviation between the first signal amplitude difference and the second signal amplitude difference is not greater than a tolerance value $D_T$, wherein $D_T$ is < 1 %.

6. Procedure as claimed in Claim 5, wherein the tolerance value of the differential deviation $D_T$ is not greater than 0.5 %, for example not greater than 0.2 %, particularly not greater than 0.1 %.

7. Procedure as claimed in Claim 5 or 6, wherein the value of the differential deviation divided by the sum of the values of the signal amplitude difference is not greater than 0.5, for example not greater than 0.3, particularly not greater than 0.2.

8. Procedure as claimed in one of the Claims 5 to 7, wherein the trimming of the sensitivity of the at least one vibration sensor comprises the variation of a relative position between a magnet and a coil of the vibration sensor.

9. Procedure as claimed in one of the Claims 5 to 8, wherein the trimming of the sensitivity of the vibration sensor comprises the variation of a rest position distance between a magnet and a coil of the at least one vibration sensor.

10. Procedure as claimed in one of the Claims 5 to 9, wherein the trimming of the sensitivity of the at least one vibration sensor comprises the variation of a degree of coaxial alignment between a magnet and a coil of the at least one vibration sensor.

11. Procedure as claimed in one of the Claims 5 to 10, wherein the trimming of the sensitivity of the at least one vibration sensor comprises the variation of the position of the vibration sensor in the direction of the longitudinal axis of the measuring tube.

12. Procedure as claimed in one of the Claims 5 to 11, wherein the trimming of the sensitivity of the at least one vibration sensor comprises the variation of the position of the vibration sensor perpendicularly to the direction of the longitudinal axis of the measuring tube.

13. Procedure as claimed in one of the Claims 5 to 12, wherein the trimming of the sensitivity of the at least one vibration sensor comprises the variation of the effective number of turns of the coil of the vibration sensor.

14. Procedure as claimed in one of the Claims 5 to 13, wherein the adjustment of the signal amplitude differences comprises the trimming of the sensitivity of precisely one vibration sensor.

**Revendications**

1. Débitmètre massique (100) selon le principe Coriolis, lequel débitmètre est destiné à la détermination d'une valeur mesurée de débit massique d'un produit traversant le débitmètre massique, lequel débitmètre massique comprend :

une première paire de tubes de mesure (110a, 110b) avec deux tubes de mesure montés de manière à pouvoir vibrer l'un par rapport à l'autre avec un mode utile de vibration de flexion, lequel mode présente une première fréquence propre de mode utile f1 dépendant du produit ;

un premier excitateur électrodynamique (140a) destiné à générer les vibrations de flexion entre les tubes de mesure de la première paire de tubes de mesure (110a, 110b),

une première paire de capteurs de vibrations avec un premier capteur de vibrations côté entrée (142a-1) et un premier capteur de vibrations côté sortie (142a-2), lesquels capteurs sont destinés à mesurer les vibrations de flexion en deux positions de la première paire de tubes de mesure (110a, 110b) ;

une deuxième paire de tubes de mesure avec deux tubes de mesure (110c, 110d) montés de manière à pouvoir vibrer l'un par rapport à l'autre avec un mode utile de vibration de flexion, lequel mode présente une deuxième fréquence propre de mode utile f2 dépendant du produit,

un deuxième excitateur électrodynamique (140c) destiné à générer les vibrations de flexion entre les tubes de mesure de la deuxième paire de tubes de mesure ;

une deuxième paire de capteurs de vibrations comprenant un deuxième capteur de vibrations côté entrée (142c-1) et un deuxième capteur de vibrations côté sortie (142c-2), lesquels capteurs sont destinés à mesurer les vibrations de flexion en deux positions de la deuxième paire de tubes de mesure ;

un circuit de fonctionnement et d'exploitation (160) destiné à

- commander les premier et deuxième excitateurs électrodynamiques (140a, 140c) avec un signal d'excitation commun,
- mesurer les signaux des capteurs de vibrations (142a-1, 142a-2, 142c-1, 142c-2),
- déterminer des différences de phase dépendant du débit entre les signaux des capteurs de vibrations côté entrée et côté sortie de l'une des paires de capteurs de vibrations et à
- déterminer des valeurs mesurées de débit massique sur la base de ces différences de phase dépendant du débit ;

le signal d'excitation - qui comprend un signal superposé des fréquences propres de mode utile f1, f2 des deux paires de tubes de mesure - servant à exciter les modes utiles de vibration de flexion des deux paires de tubes de mesure ; les vibrations de résonance à la fréquence propre de mode utile f1, f2 respective d'une paire de tubes de mesure présentant une amplitude plusieurs fois supérieure à celle des vibrations forcées hors résonance à la fréquence propre de mode utile f2, f1 de l'autre paire de tubes de mesure respective ;

un trajet de signal d'excitation étant agencé pour transmettre le signal d'excitation au premier et au deuxième excitateur électrodynamique ;

un trajet de signal de capteur côté entrée étant agencé pour transmettre de manière superposée des signaux du premier et du deuxième capteur de vibrations côté entrée ;

un trajet de signal de capteur côté sortie étant agencé pour transmettre de manière superposée des signaux du premier et du deuxième capteur de vibrations côté sortie ;

les signaux de capteur présentant, lors de vibrations à la première fréquence propre du mode utile f1, une première différence relative d'amplitude de signal delta₁ entre les signaux des capteurs côté entrée et les signaux des capteurs côté sortie,

les signaux de capteur présentant, lors de vibrations à la deuxième fréquence propre de mode utile f2, une deuxième différence relative d'amplitude de signal delta₂ entre les signaux des capteurs côté entrée et les signaux des capteurs côté sortie,

la valeur absolue de l'écart différentiel D = |delta₁ - delta₂| de la deuxième différence relative d'amplitude de signal delta₂ par rapport à la première différence relative d'amplitude de signal delta₁ n'étant pas supérieure à une valeur de tolérance $D_T$, c'est-à-dire $D \leq D_T$, $D_T$ étant inférieure à 2 %, $D_T$ étant notamment inférieure à 1 %.

2. Débitmètre massique selon la revendication 1, pour lequel la différence relative d'amplitude de signal delta$_i$ entre les amplitudes de signal des capteurs de vibrations de la ième paire de tubes de mesure lors de vibrations à sa fréquence propre de mode utile fi est définie comme suit :

$$delta_i = \frac{2 \cdot (A_{in,i} - A_{out,i})}{A_{in,i} + A_{out,i}}.$$

3. Débitmètre massique selon la revendication 1 ou 2, pour lequel la valeur de tolérance $D_T$ de l'écart différentiel n'est pas supérieure à 0,5 %, par exemple pas supérieure à 0,2 %, notamment pas supérieure à 0,1 %.

4. Débitmètre massique selon l'une des revendications précédentes, pour lequel la valeur absolue de l'écart différentiel divisée par la somme des valeurs absolues de la différence relative des amplitudes de signal n'est pas supérieure à 0,5, par exemple pas supérieure à 0,3, notamment pas supérieure à 0,2.

5. Procédé destiné à l'ajustage du zéro d'un débitmètre massique selon le principe Coriolis, lequel procédé est destiné à déterminer une valeur mesurée de débit massique d'un produit traversant le débitmètre massique, lequel débitmètre massique comprend :

une première paire de tubes de mesure avec deux tubes de mesure montés de manière à pouvoir vibrer l'un par rapport à l'autre avec un mode utile de vibration de flexion, lequel mode présente une première fréquence propre de mode utile f1 dépendant du produit ;

un premier excitateur électrodynamique destiné à générer les vibrations de flexion entre les tubes de mesure de la première paire de tubes de mesure,

une première paire de capteurs de vibrations avec un premier capteur de vibrations côté entrée et un premier capteur de vibrations côté sortie, lesquels capteurs sont destinés à mesurer les vibrations de flexion en deux positions de la première paire de tubes de mesure ;

une deuxième paire de tubes de mesure avec deux tubes de mesure montés de manière à pouvoir vibrer l'un par rapport à l'autre avec un mode utile de vibration de flexion, lequel mode présente une deuxième fréquence propre de mode utile f2 dépendant du produit,

un deuxième excitateur électrodynamique destiné à générer les vibrations de flexion entre les tubes de mesure de la deuxième paire de tubes de mesure ;

une deuxième paire de capteurs de vibration avec un deuxième capteur de vibration côté entrée et un deuxième capteur de vibration côté sortie, lesquels capteurs sont destinés à mesurer les vibrations de flexion en deux positions de la deuxième paire de tubes de mesure ;

un circuit de fonctionnement et d'exploitation destiné à commander le premier et le deuxième excitateur électrodynamique avec un signal d'excitation commun,

et lequel circuit est destiné à

- mesurer les signaux des capteurs de vibrations
- déterminer des différences de phase dépendant du débit entre les signaux des capteurs de vibrations côté entrée et côté sortie d'une des paires de capteurs de vibrations et à
- déterminer des valeurs mesurées de débit massique sur la base de ces différences de phase dépendant du débit ;

le signal d'excitation servant à exciter les modes utiles de vibration de flexion des deux paires de tubes de mesure ;

un trajet de signal d'excitation étant agencé pour transmettre le signal d'excitation au premier et au deuxième excitateur électrodynamique ;

un trajet de signal de capteur côté entrée étant agencé pour transmettre de manière superposée les signaux du premier et du deuxième capteur de vibrations côté entrée ;

un trajet de signal de capteur côté sortie étant agencé pour transmettre de manière superposée les signaux du premier et du deuxième capteur de vibrations côté sortie ;

le procédé comprenant les étapes suivantes :

Détermination des amplitudes des signaux des capteurs de vibrations côté entrée lors de vibrations des tubes de mesure à la fréquence propre du premier mode utile f1 ;

Détermination des amplitudes des signaux des capteurs de vibrations côté sortie lors de vibrations des tubes de mesure à la fréquence propre du premier mode utile f1 ;

Détermination des amplitudes des signaux des capteurs de vibrations côté entrée lors de vibrations des tubes de mesure à la deuxième fréquence propre du mode utile f2 ;

Détermination des amplitudes des signaux des capteurs de vibrations côté sortie lors de vibrations des tubes de mesure à la deuxième fréquence propre du mode utile f2 ;

Détermination d'une première différence relative d'amplitude de signal entre les signaux des capteurs de vibrations côté entrée et les signaux des capteurs de vibrations côté sortie lors de vibrations des tubes de mesure à la première fréquence propre du mode utile,

Détermination d'une deuxième différence relative d'amplitude de signal entre les signaux des capteurs de vibrations côté entrée et les signaux des capteurs de vibrations côté sortie lors de vibrations des tubes de mesure à la deuxième fréquence propre du mode utile,

Comparaison de la première différence relative d'amplitude de signal avec la deuxième différence relative d'amplitude de signal ; et

le cas échéant,

Ajustage des différences d'amplitude de signal en réglant la sensibilité d'au moins un capteur de vibrations de sorte que la valeur absolue d'un écart différentiel entre la première différence d'amplitude de signal et la seconde différence d'amplitude de signal ne dépasse pas une valeur de tolérance $D_T$, $D_T$ étant inférieure à 1 %.

6. Procédé selon la revendication 5, pour lequel la valeur de tolérance de l'écart différentiel $D_T$ n'est pas supérieure à 0,5 %, par exemple pas supérieure à 0,2 %, notamment pas supérieure à 0,1 %.

7. Procédé selon la revendication 5 ou 6, pour lequel la valeur de l'écart différentiel divisée par la somme des valeurs de la différence d'amplitude de signal n'est pas supérieure à 0,5, par exemple pas supérieure à 0,3, notamment pas supérieure à 0,2.

8. Procédé selon l'une des revendications 5 à 7, pour lequel le réglage de la sensibilité de l'au moins un capteur de vibrations consiste à faire varier une position relative entre un aimant et une bobine du capteur de vibrations.

9. Procédé selon l'une des revendications 5 à 8, pour lequel le réglage de la sensibilité du capteur de vibrations consiste à faire varier une distance de repos entre un aimant et une bobine de l'au moins un capteur de vibrations.

10. Procédé selon l'une des revendications 5 à 9, pour lequel le réglage de la sensibilité de l'au moins un capteur de vibrations consiste à faire varier un degré d'alignement coaxial entre un aimant et une bobine de l'au moins un capteur de vibrations.

11. Procédé selon l'une des revendications 5 à 10, pour lequel le réglage de la sensibilité de l'au moins un capteur de vibrations consiste à faire varier la position du capteur de vibrations dans la direction de l'axe longitudinal du tube de mesure.

12. Procédé selon l'une des revendications 5 à 11, pour lequel le réglage de la sensibilité de l'au moins un capteur de vibrations consiste à faire varier la position du capteur de vibrations perpendiculairement à la direction de l'axe longitudinal du tube de mesure.

13. Procédé selon l'une des revendications 5 à 12, pour lequel le réglage de la sensibilité de l'au moins un capteur de vibrations consiste à faire varier le nombre de spires efficaces de la bobine du capteur de vibrations.

14. Procédé selon l'une des revendications 5 à 13, pour lequel le réglage des différences d'amplitude de signal comprend le réglage de la sensibilité d'un unique capteur de vibrations.

**Fig. 1a**

**Fig. 1b**

**Fig. 1c**

**Fig. 1d**

17

Fig. 1e

FIG. 2a

FIG. 2b

SENSORSIGNAL

PHASE

**FIG. 3a**

**FIG. 3b**

**FIG. 3c**

**FIG. 3d**

**FIG. 3e**

EP 3 701 231 B1

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015104931 A1
- DE 102004035971 A1